# EUROPÄISCHE PATENTSCHRIFT

(11) **EP 2 025 550 B1**
(45) Veröffentlichungstag und Bekanntmachung des Hinweises auf die Patenterteilung: **10.10.2012**
(21) Anmeldenummer: 08014423.1
(22) Anmeldetag: 13.08.2008
(51) Int. Cl.: B60K 6/383, B60K 6/48, B60K 6/547, F16D 33/00

(54) **Kraftfahrzeug-Anfahrelement und Verfahren zum Antreiben eines Kraftfahrzeugs**
Motor vehicle launching element and method for operating a motor vehicle
Elément de démarrage de véhicule automobile et procédé d'entraînement d'un véhicule automobile

(30) Priorität: 13.08.2007 DE 102007038236
(43) Veröffentlichungstag der Anmeldung: 18.02.2009
(73) Patentinhaber: Voith Patent GmbH, 89522 Heidenheim (DE)
(72) Erfinder: Klement, Werner, Prof., 89520 Heidenheim (DE); Becke, Martin, 89076 Ulm (DE); Brockmann, Rolf, 89522 Heidenheim (DE); Koch, Werner, 73326 Deggingen (DE)
(74) Vertreter: Dr. Weitzel & Partner

(56) Entgegenhaltungen:
- DE-A1- 10 045 337
- DE-A1- 10 120 174
- DE-A1- 10 219 080
- JP-A- 2003 154 862
- JP-A- 2003 220 842

## Beschreibung

Die vorliegende Erfindung betrifft ein Kraftfahrzeug-Anfahrelement, welches in Form einer Kupplung mit einer antreibbaren Primärseite und einer über die Primärseite angetriebenen Sekundärseite ausgeführt ist, wobei die Sekundärseite mittels einer Bremseinrichtung verzögert oder stationär gehalten werden kann. Ferner betrifft die vorliegende Erfindung ein Verfahren zum Antreiben eines Kraftfahrzeugs, welches einen Kraftfahrzeugantriebstrang mit einem entsprechenden Kraftfahrzeug-Anfahrelement aufweist.

Ein Kraftfahrzeug-Anfahrelement gemäß dem Oberbegriff von Anspruch 1 wird in der DE 103 43 972 A1 beschrieben. Bei diesem Anfahrelement ist das Turbinenrad mittels einer Bremseinrichtung festsetzbar, um zugleich einen der beiden Eingänge des im Antriebsleistungsfluss hinter dem Anfahrelement vorgesehenen Schaltgetriebes festzusetzen.

Ein Nachteil der bisherigen Ausführung besteht darin, dass eine derartige Bremseinrichtung lediglich für ein Stationärhalten oder Abbremsen des Turbinenrads geeignet ist, beim Abbremsen Antriebsleistung in Reibung und damit Wärme umgewandelt wird, und die Bremsenergie ungenutzt bleibt. Ferner führt die mechanische Reibung zu einem Verschleiß und damit zu einem notwendigen Austausch oder einer Wartung der Bremseinrichtung.

Das Dokument DE 10 2004 055 821 A1 schlägt vor, bei einem hydrodynamischen Retarder eine elektrische Maschine zum Abbremsen des dem Stator gegenüberstehenden Rotors des Retarders vorzusehen, um die durch die Baugröße des Retarders beschränkte Bremsleistung in bestimmten Betriebszuständen zu erhöhen, ohne einen größeren und schwereren Retarder verwenden zu müssen. Obgleich die elektrische Maschine auch motorisch betrieben werden kann, um den Rotor des Retarders anzutreiben, kann der Retarder selbst nicht als hydrodynamisches Anfahrelement, wie es die vorliegende Erfindung gemäß einer vorteilhaften Ausführungsform betrifft, verwendet werden.

DE 102 19 080 A1 beschreibt ein Automatgetriebe mit einem Anfahrelement in Gestalt einer hydrodynamischen Kupplung, ferner mit einem Elektromotor, der als Bremseinrichtung dient. Dabei besteht die Gefahr, dass Synchronelemente im Getriebe durch zusätzliche Massenträgheit geschädigt werden.

DE 10 2004 059 744 A1 beschreibt ein automatisiertes Schaltgetriebe mit Freilauf.

Weitere Anfahrelemente sind aus JP 2003 220842 A, die Oberbegriff des Anspruches 1 offenbart, JP 2003 154862 A, DE 101 20 174 A1 und DE 100 45 337 A1 bekannt geworden.

Der Erfindung liegt die. Aufgabe zugrunde, ein Kraftfahrzeug-Anfahrelement in Form einer Kupplung mit einer antreibbaren Primärseite und einer von der Primärseite angetriebenen Sekundärseite mit einer Bremseinrichtung für die Sekundärseite anzugeben, bei welcher die Bremsenergie zum Abbremsen der Sekundärseite energetisch sinnvoll genutzt werden kann. Vorteilhaft soll das Abbremsen weitgehend oder vollständig verschleißfrei erfolgen. Ferner soll ein Verwahren zum Antreiben eines Fahrzeugs mit einem entsprechenden Anfahrelement angegeben werden, das zusätzliche Funktionen aufweist, um den Gesamtwirkungsgrad beim Antreiben des Fahrzeugs zu verbessern und vorteilhaft den konstruktiven Aufbau zu vereinfachen. Insbesondere sollen Maßnahmen getroffen werden, um beim Feststellen beziehungsweise Festsetzen des Turbinenrades der hydrodynamischen Kupplung die Getriebeeingangswelle weiterlaufen zu lassen.

Die erfindungsgemäße Aufgabe wird durch ein Krattfahrzeug-Anfahrelement mit den Merkmalen von Anspruch 1 und ein Verfahren mit den Merkmalen von Anspruch 11 gelost Vorteilhafte und besonders zweckmäßige Ausgestaltungen der Erfindungen gehen aus den Unteransprüchen hervor.

Die Erfindung sieht ein Kraftfahrzeug-Anfahrelement in Form einer hydrodynamischen Kupplung, beispielsweise eine Viskokupplung, mit einer Primärseite und einer Sekundärseite vor, bei welcher sich das Drehzahlverhältnis zwischen der Primärseite und der Sekundärseite aufgrund der hydrodynamischen Leistungsübertragung von der Primärseite auf die Sekundärseite einstellt und insbesondere über eine Stellgröße regelbar oder steuerbar ist.

Gemäß der Erfindung ist die Kupplung als hydrodynamische Kupplung mit einem primärseitigen Pumpenrad und einem sekundärseitigen Turbinenrad ausgeführt, welche gemeinsam einen torusförmigen Arbeitsraum bilden, der mit einem Arbeitsmedium befüllt ist oder befüllt werden kann, um Antriebsleistung hydrodynamisch vom Pumpenrad auf das Turbinenrad zu übertragen.

Der Sekundärseite beziehungsweise bei Ausführung als hydrodynamische Kupplung dem Turbinenrad ist erfindungsgemäß eine Bremseinrichtung in Form einer elektrischen Maschine, welche einen Stator und einen Rotor aufweist, die über eine elektromagnetische Wechselwirkung miteinander gekoppelt sind, zugeordnet. Dabei ist der Rotor mit der Sekundärseite beziehungsweise dem Turbinenrad drehfest verbunden oder verbindbar, um die Sekundärseite beziehungsweise das Turbinenrad zu verzögern und insbesondere auch stationär zu halten. Bei dieser Verzögerung kann über die elektromagnetische Wechselwirkung elektrische Energie erzeugt werden, die dann zur Speisung eines elektrischen Verbrauchers verwendet werden kann und/oder in einem Energiespeicher gespeichert werden kann. Vorteilhaft kann die Sekundärseite der Kupplung beziehungsweise das Turbinenrad in vorbestimmten Betriebszuständen auch mittels der elektrischen Maschine elektrisch beschleunigt beziehungsweise angetrieben werden.

Ein wichtiges Merkmal der Erfindung ist ein Freilauf. Dieser befindet sich auf der Abtriebsseite der Kupplung, das heißt in Kraftflussrichtung beziehungsweise Leistungsfiussrichtung hinter dem Sekundärrad beziehungsweise am Turbinenrad. Demgemäß überträgt das Sekundärrad beziehungsweise das Turbinenrad in einer ersten Drehrichtung Antriebsleistung auf den Abtrieb der Kupplung, wohingegen in einer zweiten, zur ersten Drehrichtung entgegengesetzten Drehrichtung das Sekundärrad beziehungsweise das Turbinenrad auf dem Abtrieb frei umlaufen kann und keine Antriebsleistung auf den Abtrieb überträgt.

Die Primärseite und die Sekundärseite können mittels einer Überbrückungskupplung mechanisch miteinander verbunden werden. Die mechanische Verbindung ist parallel zu der hydrodynamischen Leistungsübertragung angeordnet, wobei bei geschlossener Überbrückungskupplung die hydrodynamische Leistungsübertragung auch beendet werden kann, bei Ausführung des Anfahrelements als hydrodynamische Kupplung beispielsweise durch Entleeren des Arbeitsraums. Die Überbrückungskupplung kann beispielsweise als Reibkupplung oder vorteilhaft als formschlüssige Klauenkupplung ausgeführt sein, wobei zur Synchronisierung der Primärseite und der Sekundärseite vor dem Schließen der Klauenkupplung vorteilhaft die elektrische Maschine verwendet werden kann.

Bei Ausführung des Anfahrelements in Form einer hydrodynamischen Kupplung kann diese als Konstantfüllungskupplung ausgebindet sein, das heißt der Arbeitsraum kann nur mit einem Arbeitsmedium befüllt und entleert werden, ohne dass die im Arbeitsraum in einer Kreislaufströmung umlaufende Arbeitsmediummenge gezielt von außen einstellbar ist. Vorteilhaft ist die hydrodynamische Kupplung jedoch als regelbare Kupplung ausgeführt, das heißt der Füllungsgrad des Arbeitsraums ist von außen gezielt einstellbar zwischen einem entleerten Zustand und einem maximalen Füllungsgrad (von 100 Prozent Die Steuerung oder Regelung des Füllungsgrads kann beispielsweise durch Aufbringen eines Überlagerungsdruckes auf das Arbeitsmedium in einem Arbeitsmediumvorrat, aus welchem das Arbeitsmedium in den Arbeitsraum der hydrodynamischen Kupplung geleitet wird, erfolgen. Mit der Einstellung des Füllungsgrads ist das vom Pumpenrad auf das Turbinenrad beziehungsweise von der Primärseite auf die Sekundärseite übertragene Drehmoment variabel einstellbar. Alternativ kann eine gezielte Einstellung des übertragenen Drehmomentes auch über mechanische Einbauten erfolgen, die in die Kreislaufströmung von Arbeitsmedium im Arbeitsraum einbringbar sind, so dass sie eine drosseinde beziehungsweise umlenkende Wirkung auf die Kreislaufströmung ausüben.

Ein Kraftfahrzeugantriebsstrang, welcher ein erfindungsgemäßes Anfahrelement, in Form einer hydrodynamischen Kupplung aufweist, umfasst eine Eingangswelle zum Einleiten einer Antriebsleistung von einer Antriebseinheit und eine Ausgangswelle zum Abgeben der Antriebsleistung auf die Antriebsräder des Kraftfahrzeugs. Die Eingangswelle kann beispielsweise eine Kurbelwelle eines Verbrennungsmotors sein, und die Ausgangswelle kann beispielsweise eine Gelenkwelle sein. Ferner ist in dem Kraftfahrzeugantriebstrang ein Schaltgetriebe vorgesehen, welches, wie bekannt, eine Vielzahl von Gangstufen zur Einstellung verschiedener Übersetzungsverhältnisse zwischen der Drehzahl einer Getriebeeingangswelle und der Drehzahl einer Getriebeausgangswelle umfasst. Die Getriebeausgangswelle bildet die Ausgangswelle des Kraftfahrzeugantriebsstrangs oder ist in eine Triebverbindung mit der Ausgangswelle schaltbar beziehungsweise steht permanent in einer solchen Triebverbindung. Die Getriebeeingangswelle steht in einer Triebverbindung mit der Abtriebsseite des Anfahrelements oder ist in eine solche schaltbar, das heißt, sie ist in einer Triebverbindung mit der Sekundärseite des Anfahrelements angeordnet oder in diese schaltbar.

Die Sekundärseite des Anfahrelements, insbesondere das Turbinenrad der hydrodynamischen Kupplung und der Rotor der elektrischen Maschine können beispielsweise drehfest auf der Getriebeeingangswelle angeordnet sein und insbesondere von dieser, vorteilhaft ohne ein zusätzliches Lager, getragen werden.

Das Schaltgetriebe kann beispielsweise ein automatisiertes Schaltgetriebe, ein Automatgetriebe oder ein manuelles Schaltgetriebe sein.

Gemäß einer Ausführungsform der Erfindung ist die elektrische Maschine die einzige Bremseinrichtung, welche der Sekundärseite beziehungsweise dem Turbinenrad zugeordnet ist. Alternativ kann eine weitere Bremseinrichtung parallel vorgesehen sein, um die Sekundärseite beziehungsweise das Turbinenrad zusätzlich oder alternativ zu der elektrischen Maschine in bestimmten Betriebszuständen abzubremsen.

Besonders vorteilhaft ist es, das erfindungsgemäße Anfahrelement zusammen mit dem Schaltgetriebe in einem gemeinsamen Gehäuse anzuordnen. Auch die elektrische Maschine kann in diesem Gehäuse zusätzlich angeordnet werden.

Bei einer Ausführungsform weist das Schaltgetriebe eine einzige GetriebeeIngangswelle auf, welche erfindungsgemäß in einer Triebverbindung mit der Sekundärseite des Anfahrelements steht. In diese Triebverbindung kann, wie im Zusammenhang mit der Ausführung des erfindungsgemäßen Anfahrelementes beschrieben, ein Freilauf vorgesehen sein, oder die Triebverbindung ist frei von Frelläufen. Insbesondere ist eine permanente mechanische Triebverbindung in einer oder beiden Drehrichtungen der Triebverbindung zwischen der Sekundärseite und der Getriebeeingangswelle vorgesehen.

Mit dem Anfahrelement, wie es die vorliegende Erfindung vorsieht, lassen sich über die mit der Sekundärseite verbundene elektrische Maschine vorteilhaft die folgenden Funktionen verwirklichen:

Wenn das Kraftfahrzeug mit einem Kraftfahrzeugantriebsstrang, umfassend ein erfindungsgemäßes Anfahrelement, mit einem Verbrennungsmotor als Antriebseinheit versehen ist, kann der Verbrennungsmotor mittels der elektrischen Maschine durch Antreiben der Sekundärseite des Anfahrelementes und Übertragen der Antriebsleistung mechanisch oder hydrodynamisch auf die Primärseite des Anfahrelementes angelassen werden. Ferner ist ein rein elektrisches Anfahren oder Fahren des Kraftfahrzeugs mittels der elektrischen Maschine möglich, oder das Fahrzeug wird neben dem Antrieb mittels der Antriebseinheit des Fahrzeugs zusätzlich durch die elektrische Maschine angetrieben. Man könnte diese letzte Funktion als Booster-Funktion bezeichnen.

Eine Wirkungsgradverbesserung kann dadurch erzielt werden, dass bei Antreiben des Kraftfahrzeugs mittels einem Verbrennungsmotor Arbeitspunkte des Verbrennungsmotors durch Belasten desselben mittels der elektrischen Maschine hin zu optimalen Motorbetriebspunkten verschoben werden. Diese optimalen Betriebspunkte zeichnen sich durch einen besonders geringen Kraftstoffverbrauch pro vom Verbrennungsmotor abgegebener Kilowattstunde aus. Diese Verschiebung wird dadurch erreicht, dass das vom Verbrennungsmotor abgegebene Drehmoment durch Aufbringen einer Last mittels der elektrischen Maschine erhöht wird. Mit der Lasterhöhung durch Antreiben des Rotors der elektrischen Maschine durch den Verbrennungsmotor wird zugleich elektrische Energie erzeugt, die sofort genutzt oder zur späteren Nutzung in einem Energiespeicher gespeichert werden kann. Die so gespeicherte Energie kann in einem späteren Zeitpunkt beispielsweise wiederum zum elektrischen Antrieb des Fahrzeugs mittels der elektrischen Maschine verwendet werden.

Mittels der elektrischen Maschine können auch Komponenten des Antriebsstrangs synchronisiert werden, beispielsweise Komponenten im Schaltgetriebe durch Abbremsen oder Beschleunigen der Getriebeeingangswelle mittels der elektrischen Maschine. Auch wenn eine Überbrückungskupplung zwischen der Primärseite und der Sekundärseite des Anfahrelementes vorgesehen ist, können die Primärseite und die Sekundärseite durch Antreiben oder Abbremsen der Sekundärseite mittels der elektrischen Maschine synchronisiert werden, um die Überbrückungskupplung, welche dann als Klauenkupplung oder andere synchron schaltende Kupplung ausgeführt sein kann, bei gleicher Drehzahl beider Kupplungshälften zu schließen.

Mit der elektrischen Maschine ist auch ein Sichern des Fahrzeugs gegen Rollen, insbesondere gegen Rückrollen beim Anfahren an einer Steigung möglich, indem die Getriebeeingangswelle mittels der elektrischen Maschine festgesetzt wird.

Schließlich kann die elektrische Maschine zum Teil oder vollständig die herkömmliche Funktion einer Motorbremse übemehmen, wobei entsprechend der Antriebsmotor des Fahrzeugs abgekoppelt wird oder im Schubbetrieb mit dem Antriebsstrang verbunden bleibt. Im Gegensatz zum herkömmlichen reinen Motorbremsbetrieb wird die Bremsenergie nutzbar gemacht, indem sie mittels der elektrischen Maschine in elektrische Energie umgewandelt wird.

Die Erfindung wird nachfolgend anhand von Figuren exemplarisch erläutert. Darin ist im Einzelnen folgendes dargestellt:
- Figur 1: zeigt in schematisch vereinfachter Darstellung eine erste Ausführungsform eines erfindungsgemäßen Anfahrelementes in Form einer hydrodynamischen Kupplung, integriert in einem Getriebegehäuse;
- Figur 2: zeigt in schematisch vereinfachter Darstellung eine zweite Ausführungsform des erfindungsgemäßen Anfahrelementes in Form einer hydrodynamischen Kupplung mit einem Freilauf, integriert im Getriebegehäuse;
- Figur 3: zeigt in schematisch vereinfachter Darstellung eine dritte Ausführungsform des erfindungsgemäßen Anfahrelementes in Form einer hydrodynamischen Kupplung, integriert im Getriebegehäuse;

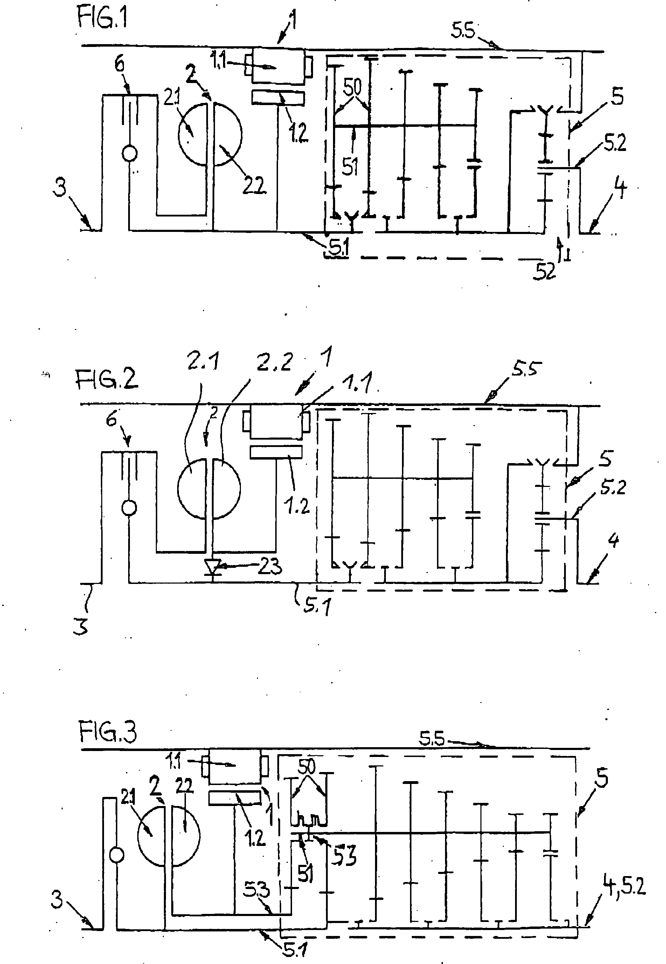

Figur 1 zeigt eine erste Ausführungsform eines erfindungsgemäßen Anfahrelements in Form einer hydrodynamischen Kupplung 2 mit einem primärseitigen Pumpenrad 2.1 und einem sekundärseitigen Turbinenrad 2.2 in einem Kraftfahrzeugantriebsstrang in Richtung des Antriebsleistungsflusses im Antriebsstrang gesehen unmittelbar vor einem Schaltgetriebe 5. Das Turbinenrad 2.2 ist drehfest mit dem Rotor 1.2 einer elektrischen Maschine 1 verbunden. Der Rotor 1.2 der elektrischen Maschine 1 steht einem Stator 1.1 der elektrischen Maschine 1 gegenüber, um zwischen Rotor 1.2 und Stator 1.1 ein elektromagnetisches Feld auszubilden, mittels welchem die elektrische Maschine 1 entweder im generatorischen Betrieb bei durch den Antriebsstrang angetriebenem Rotor 1.2 oder im motorischen Betrieb bei Antrieb des Antriebsstrangs mittels dem Rotor 1.2 zu betreiben. Vorliegend umschließt der Stator 1.1 den Rotor 1.2 auf dessen radialer Außenseite. Selbstverständlich sind andere Anordnungen möglich.

Das Schaltgetriebe 5 weist eine Getriebeeingangswelle 5.1 auf, welche bei der in der Figur 1 gezeigten Ausführungsform die einzige Getriebeeingarigswelle ist. Von der Getriebeeingangswelle 5.1 ist Antriebsleistung über verschiedene Schaltstufen, siehe beispielsweise das Bezugszeichen 50, auf eine Getriebeausgangswelle 5.2 übertragbar. Wie dargestellt, kann das Schaltgetriebe 5 beispielsweise eine Getriebenebenwelle 51, verschiedene Klauenkupplungen und abtriebsseitig ein Planetengetriebe 52 aufweisen, um verschiedene Übersetzungsverhältnisse zwischen der Getriebeeingangswelle 5.1 und der Getriebeausgangswelle 5.2 wahlweise herzustellen.

Die Getriebeausgangswelle 5.2 steht in einer drehfesten Verbindung mit der Ausgangswelle 4 des gezeigten Antriebsstrangs oder bildet diese aus, um über die Ausgangswelle 4 Antriebsleistung auf die Antriebsräder (nicht gezeigt) des Fahrzeugs zu übertragen. Beispielsweise kann die Ausgangswelle 4 hierfür mit einer Gelenkwelle verbunden sein.

Die Getriebeeingangswelle 5.1 trägt sowohl den Rotor 1.2 der elektrischen Maschine als auch das Turbinenrad 2.2 der hydrodynamischen Kupplung 2. Ferner ist eine erste Kupplungshälfte, hier mit einem integrierten Drehschwingungsdämpfer, einer Oberbrückungskupplung 6 auf der Getriebeeingangswelle 5.1 angeordnet beziehungsweise wird von dieser getragen oder ist einstückig mit dieser ausgebildet. Diese erste Hälfte der Überbrückungskupplung 6 steht somit in einer Triebverbindung beziehungsweise einer starren Verbindung mit dem Turbinenrad 2.2. Die zweite Kupplungshälfte der Überbrückungskupplung 6 steht in einer Triebverbindung mit der Eingangswelle 3 des Antriebsstrangs und dem Pumpenrad 2.1 der hydrodynamischen Kupplung 2. Somit kann die hydrodynamische Kupplung 2 mittels der Überbrückungskupplung 6 mechanisch überbrückt werden.

Die Eingangswelle 3 ist mit der Abtriebswelle einer Antriebseinheit (nicht dargestellt), insbesondere eines Verbrennungsmotors, des Kraftfahrzeugs verbunden beziehungsweise wird durch diese gebildet. Beispielsweise ist die Eingangswelle 3 die Kurbelwelle eines Verbrennungsmotors. In der gezeigten Ausführungsform weist das Schaltgetriebe 5 ein Gehäuse 5.5 auf, in welchem der Stator 1.1 der elektrischen Maschine 1 ortsfest angeordnet ist. Zugleich umschließt das Gehäuse 5.5 die gesamte elektrische Maschine 1, die hydrodynamische Kupplung 2 und die Überbrückungskupplung 6 mit ihren beiden Kupplungshälften. Selbstverständlich können eine oder mehrere dieser Komponenten auch außerhalb des Gehäuses 5.5 angeordnet sein,

Wenn nun das Kraftfahrzeug durch Einspeisen von Antriebsleistung der Antriebseinheit in die Eingangswelle 3 angefahren werden soll, so wird zunächst der Arbeitsraum der hydrodynamischen Kupplung 2 mit Arbeitsmedium befüllt oder befüllt gehalten, um die Antriebsleistung von der Eingangswelle 3 hydrodynamisch und somit verschleißfrei auf die Getriebeeingangswelle 5.1 zu übertragen. Die überbrückungskupplung 6 ist in diesem Fall geöffnet, da die Getriebeeingangswelle 5.1 und damit die erste Kupplungshälfte der Überbrückungskupplung 6 zu Beginn des Anfahrvorgangs aus dem Stand steht und anschließend mit langsam zunehmender Geschwindigkeit rotiert, während die Eingangswelle 3 mit der Drehzahl der Antriebseinheit beim Anfahren, beispielsweise zwischen 1200 und 2000 Umdrehungen oder mehr, umläuft.

Mittels der elektrischen Maschine 1 kann nun, muss aber nicht notwendigerweise, zusätzlich ein Antriebsmoment auf die Getriebeeingangswelle 5.1 aufgebracht werden, indem die elektrische Maschine 1 als Elektromotor betrieben wird, um den Anfahrvorgang beziehungsweise das Beschleunigen des Fahrzeugs zu unterstützen. Alternativ kann die elektrische Maschine 1 auch generatorisch betrieben werden, das heißt, es wird Antriebsleistung von der Getriebeeingangswelle 5.1 auf den Rotor 1.2 der elektrischen Maschine 1 abgeführt, so dass die elektrische Maschine 1 ein Bremsmoment auf die Getriebeeingangswelle 5.1 ausübt, um die Betriebspunkte des Verbrennungsmotors hin zu höheren Lasten zu verschieben, was hinsichtlich des spezifischen Kraftstoffverbrauchs (bezogen auf die von der Antriebsmaschine abgegebene Leistung) günstig sein kann. Gleichzeitig wird dabei elektrische Energie gewonnen, die in einem geeigneten Energiespeicher (nicht dargestellt) gespeichert wird oder zum Antrieb weiterer elektrischer Aggregate oder Verbraucher genutzt wird. Selbstverständlich ist es auch möglich, die Antriebsmaschine 1 im Leerlauf zu betreiben, so dass sie weder ein Bremsmoment noch ein Antriebsmoment auf die Getriebeeingangswelle 5,1 ausübt.

Wenn der Anfahrvorgang des Fahrzeugs weitgehend abgeschlossen ist, das heißt, wenn die Getriebeeingangswelle 5.1 annähernd mit derselben Drehzahl umläuft wie die Eingangswelle 3 des Antriebsstrangs, so kann die mechanische Überbrückungskupplung 6 geschlossen werden, um Leistungsverluste beim hydrodynamischen Übertragen der Antriebsleistung zu vermeiden. Hierzu kann die überbrückungskupplung 6 beispielsweise als Reibkupplung ausgeführt sein, um im reibenden Betrieb die Drehzahldifferenz zwischen dem Pumpenrad 2.1 und dem Turbinenrad 2.2 allmählich auszugleichen. Es ist jedoch auch möglich, die Überbrückungskupplung 6 als Klauenkupplung auszuführen, die frei von einem Reibbetrieb ist, und das Pumpenrad 2.1 und das Turbinenrad 2.2 in ihrer Drehzahl dadurch zu synchronisieren, dass die Drehzahl der Eingangswelle 3 kurzzeitig über die Drehzahl der Antriebsmaschine vermindert wird oder dass zusätzlich oder alternativ die Drehzahl des Turbinenrads 2.2 über die elektrische Maschine 1 erhöht wird, indem die elektrische Maschine 1 motorisch betrieben wird.

Die elektrische Maschine 1 kann ferner zur Synchronisierung von Elementen, beispielsweise Klauenkupplungen, im Schaltgetriebe 5 verwendet werden, indem die Getriebeeingangswelle 5.1 verzögert oder beschleunigt wird.

Weitere Funktionen, die mit der elektrischen Maschine bereitgestellt werden können, sind das rein elektrische Fahren oder Anfahren des Fahrzeugs in einem Vorwärtsgang oder im Rückwärtsgang. Der Rückwärtsgang wird bei der gezeigten Ausführung durch eine Drehrichtungsumkehr der Eingangsdrehrichtung mittels dem Planetengetriebe 52 am Getriebeausgang dargestellt. Es ist jedoch auch möglich, auf einen Rückwärtsgang im Schaltgetriebe 5 zu verzichten, was den baulichen Aufwand erheblich vereinfacht, da keine Drehrichtungsumkehr ermöglicht werden muss, und stattdessen das Fahrzeug mittels der elektrischen Maschine 1 rückwärts zu fahren, indem die Drehrichtung des Rotors 1.2 der elektrischen Maschine 1 durch Umpolung des an die elektrische Maschine 1 angelegten elektrischen Felds umgekehrt wird. Allerdings ist dann kein Rückwärtsfahren des Fahrzeugs mittels dem an der Eingangswelle 3 angeschlossenen Verbrennungsmotor mehr möglich.

Der Verbrennungsmotor kann mittels der elektrischen Maschine 1 angelassen werden, bei einer Leistungsübertragung von dem Motor 1.2 der elektrischen Maschine 1 über die hydrodynamische Kupplung 2 und/oder die Überbrückungskupplung 6. Ein zusätzlicher Anlasser kann dann entfallen. Ebenso kann das Belasten des Verbrennungsmotors mittels der elektrischen Maschine 1 zur Betriebspunktoptimierung des Verbrennungsmotors über die hydrodynamische Kupplung 2 (im gefüllten Zustand) und/oder die Überbrückungskupplung 6 erfolgen. Insbesondere wird jedoch die hydrodynamische Kupplung 2 immer dann entleert, wenn die Überbrückungskupplung 6 geschlossen wird.

Die elektrische Maschine 1 kann ferner als Haltbremse für das Fahrzeug verwendet werden, insbesondere beim Anfahren am Berg. Schließlich kann die elektrische Maschine als elektrodynamische Bremse zum Abbremsen des Fahrzeugs verwendet werden,

Anstelle der in der Figur 1 gezeigten hydrodynamischen Kupplung 2 könnte auch eine andere elektrodynamische oder hydrodynamische Kupplung vorgesehen sein, beispielsweise eine Kupplung mit zwei über ein Magnetfeld oder ein Elektromagnetfeld verbundene beziehungsweise verbindbare Kupplungshälften, die dem Pumpenrad 2.1 und dem Turbinenrad 2.2 in ihren Funktionen entsprechen. Auch eine Viskokupplung könnte anstelle der gezeigten hydrodynamischen Kupplung 2 eingesetzt werden, wobei die Viskokupplung keinen Arbeitsmediumkreislauf in einem Arbeitsraum entsprechend der hydrodynamischen Kupplung 2 ausbildet, sondern die Antriebsleistungsübertragung aufgrund der Viskosität des eingebrachten Öls zwischen den beiden Kupplungshälften über Scherkräfte erfolgt. Schließlich könnte anstelle der hydrodynamischen Kupplung 2 auch ein hydrodynamischer Wandler vorgesehen sein, oder andere gleichwirkende Kupplungsformen,

Gemäß einer Ausführungsform ist das Übertragungsverhalten des Anfahrelementes, hier der hydrodynamischen Kupplung 2, über eine Stellgröße steuerbar oder regelbar. Beispielsweise kann der Füllungsgrad im Arbeitsraum der hydrodynamischen Kupplung 2 wahlweise erhöht oder vermindert werden, um Füllungszustände zwischen einer Mindestfüllung und einer maximalen Füllung (die beiden Grenzwerte eingeschlossen, wobei die Mindestfüllung gemäß einer Ausführungsform auch den entleerten Zustand umfasst) gezielt einzustellen und somit das vom Pumpenrad 2.1 auf das Turbinenrad 2.2 übertragene Drehmoment gezielt zu beeinflussen. Alternativ oder zusätzlich kommen auch mechanische Einbauten in Betracht, die die Arbeitsmediumströmung im Arbeitsraum der hydrodynamischen Kupplung 2 mehr oder minder störend in die Kreislaufströmung im Arbeitsraum eingebracht werden können.

Gemäß einer nicht dargestellten Ausführungsform können der Rotor 1.2 der elektrischen Maschine 1 und die Sekundärseite des Anfahrelementes beziehungsweise das Turbinenrad 2.2 der hydrodynamischen Kupplung 2 durch ein gemeinsames Laufrad gebildet werden. Beispielsweise kann die Sekundärseite beziehungsweise das Turbinenrad 2.2 mit Permanentmagneten versehen und/oder mit einer elektrischen Wicklung versehen sein. Somit bildet die Sekundärseite beziehungsweise das Turbinenrad 2.2 dann gleichzeitig den Rotor der elektrischen Maschine 1 aus.

Die in der Figur 2 dargestellte Ausführung entspricht hinsichtlich ihrer Grundprinzipien weitgehend jener Ausführung, die in der Figur 1 dargestellt ist, so dass diesbezüglich auf die Beschreibung der Figur 1 verwiesen werden kann. Abweichend zu der in der Figur 1 gezeigten Ausführung weist der in der Figur 2 dargestellte Antriebsstrang jedoch einen Freilauf 2.3 zwischen der Sekundärseite des Anfahrelements, hier dem Turbinenrad 2.2 der hydrodynamischen Kupplung 2, auf. Dieser Freilauf 2.3 ermöglicht, dass die hydrodynamische Kupplung 2 als hydrodynamischer Retarder betrieben werden kann, indem das Turbinenrad 2.2 mittels der elektrischen Maschine 1 festgestellt wird. Ohne den Freilauf 2.3 würde bei dem Feststellen beziehungsweise Festsetzen des Turbinenrads 2.2 zugleich die Getriebeeingangswelle 5.1 festgesetzt, was für den rein hydrodynamischen Bremsbetrieb unerwünscht ist.

Aufgrund des Freilaufes 2,3 zwischen dem Turbinenrad 2.2 und der Getriebeeingangswelle 5.1 beziehungsweise dem Rotor 1.2 und der Getriebeeingangswelle 5.1 ist ein generatorischer Betrieb der elektrischen Maschine 1 nur mittels einer Leistungsübertragung über die hydrodynamische Kupplung 2 möglich. Ferner kann die elektrische Maschine 1 nicht zur Synchronisierung im Schaltgetriebe 5 durch Abbremsen der Getriebeeingangswelle 5.1 herangezogen werden (außer über die hydrodynamische Kupplung 2 bei geschlossener Überbrückungskupplung 6 und zusätzliche Trennkupplung zwischen der Eingangswelle 3 und der Antriebsmaschine), jedoch zur Synchronisierung durch Beschleunigen der Getriebeeingangswelle 5.1. Auch ein Rückwärtsfahren ohne einen im Schaltgetriebe 5 vorgesehenen Rückwärtsgang ist nur über den Leistungsfluss von der elektrischen Maschine über die hydrodynamische Kupplung 2 (beziehungsweise allgemein das Anfahrelement) und die geschlossene Überbrückungskupplung 6, insbesondere bei Vorsehen einer zusätzlichen Trennkupplung zwischen der Eingangswelle 3 und der Antriebseinheit beziehungsweise bei abgeschalteter mitgeschleppter Antriebseinheit möglich.

Schließlich ist auch eine Bremsenergierückgewinnung mittels der elektrischen Maschine 1 nur über die geschlossene Überbrückungskupplung 6 und zugleich die hydrodynamische Kupplung 2 (beziehungsweise allgemein das Anfahrelement) möglich.

In der Figur 3 ist abweichend zu den Ausführungen in den Figuren 1 und 2 das Schaltgetriebe 5 mit zwei Getriebeeingangswellen 5.1 und 5.3 versehen. Die Getriebeeingangswelle 5.1 steht in einer drehfesten Verbindung mit der Primärseite des Anfahrelementes, hier dem Pumpenrad 2.1 der hydrodynamischen Kupplung 2 und der Eingangswelle 3. Die zweite, in der gezeigten Ausführungsform parallel zu der ersten Getriebeeingangswelle 5.1 vorgesehene Getriebeeingangswelle 5.3, die die erste Getriebeeingangswelle 5.1 beispielsweise konzentrisch umschließen kann (oder umgekehrt), steht in einer

Triebverbindung mit der Sekundärseite des Anfahrelementes, hier dem Turbinenrad 2.2 und dem Rotor 1.2 der elektrischen Maschine 1. Beide genannten Triebverbindungen werden insbesondere durch eine starre Triebverbindung, beispielsweise durch jeweils eine einteilige Ausführung der verschiedenen Komponenten hergestellt. Das Schaltgetriebe 5 weist eine Nebenwelle 51 auf, welche über eine Klauenkupplung 53 (oder eine andere geeignete Kopplung) wahlweise in eine Triebverbindung mit der ersten Getriebeeingangswelle 5.1 und/oder der zweiten Getriebeeingangswelle 5.3 geschaltet werden kann. Durch mechanisches Verbinden der ersten Getriebeeingangswelle 5.1 und der zweiten Getriebeeingangswelle 5.3 mittels der Klauenkupplung 53 oder einer anderen geeigneten Kupplung kann ferner die Funktion einer mechanischen Überbrückungskupplung für das Anfahrelement beziehungsweise die hydrodynamische Kupplung 2 dargestellt werden, so dass das Anfahrelement beziehungsweise der Antriebsstrang frei von einer gesondert vorgesehenen mechanischen Überbrückungskupplung, beispielsweise entsprechend der Überbrückungskupplung 6 in den Figuren 1 und 2, ausgeführt sein kann.

Die Verbindung zwischen der Nebenwelle 51 und der ersten Getriebeeingangswelle 5.1 wird über die Klaue m (für einen mechanischen Leistungszweig) der Klauenkupplung 53 bewirkt, und die Verbindung zwischen der Nebenwelle 51 und der zweiten Getriebeeingangswelle 5.3 wird über die Klaue h (für hydrodynamische Verbindung) der Klauenkupplung 53 bewirkt. Bei geschlossenen Klauen h, m kann die Antriebsmaschine, insbesondere der Verbrennungsmotor, mittels der elektrischen Maschine 1 angelassen werden. Bei geschlossener Klaue h kann das Fahrzeug mittels der elektrischen Maschine 1 elektrisch gefahren werden.

Auch ein Boosten mit der elektrischen Maschine 1, das heißt gleichzeitiges Antreiben des Fahrzeugs mittels der Antriebseinheit, zum Beispiel dem Verbrennungsmotor (nicht dargestellt) und der elektrischen Maschine 1, ist möglich.

Bremsenergie kann mittels der elektrischen Maschine 1 dann zurückgewonnen werden, wenn die Klaue m geschlossen ist und zugleich die Klaue h geschlossen ist und/oder die hydrodynamische Kupplung 2 gefüllt ist (bei einem abweichend ausgeführten Anfahrelement entsprechend Antriebsleistung von der Primärseite auf die Sekundärseite übertragen wird).

Auch ein Synchronisieren des Schaltgetriebes 5 ist durch Schließen der Klaue h möglich.

Schließlich kann die elektrische Maschine 1 wiederum als Haltebremse am Berg und zum elektrischen Fahren vorwärts und rückwärts (ohne Rückwärtsgang) verwendet werden.

## Patentansprüche

1. Kraftfahrzeug-Anfahreiement in Form einer regelbaren Kupplung mit einer rotierend antreibbaren Primärseite und einer von der Primärseite hydrodynamisch oder elektrodynamisch rotierend antreibbaren Sekundärseite, umfassend
1.1 eine Bremseinrichtung zum Verzögern und/oder Stationärhalten der Sekundärseite;
1.2 die Bremseinrichtung ist eine elektrische Maschine (1), welche einen Stator (1.1) und einen Rotor (1.2) aufweist, welche über eine elektromagnetische Wechselwirkung miteinander gekoppelt sind;
1.3 der Rotor (1.2) ist mit der Sekundärseite der Kupplung drehfest verbunden oder verbindbar, um die Sekundärseite zu verzögern;
1.4 die Kupplung ist eine hydrodynamische Kupplung (2) mit einem primärseitigen Pumpenrad (2.1) und einem sekundärseitigen Turbinenrad (2.2), welche gemeinsam einen torusförmigen Arbeitsraum bilden, der zur Ausbildung einer drehmomentübertragenden Kreislaufströmung mit einem Arbeitsmedium befüllt oder befüllbar ist, wobei das Pumpenrad (2.1) und das Turbinenrad (2.2) über eine zur Leistungsübertragung im Arbeitsraum parallel geschaltete mechanische Überbrückungskuppfung (6) mechanisch miteinander verbindbar sind;
1.5 die hydrodynamische Kupplung (2) ist auf ihrer Abtriebsseite in Kraftflussrichtung hinter dem Turbinenrad (2.2) mit einem Freilauf (2.3) versehen;
**gekennzeichnet durch** die folgenden Merkmale:
1.6 der Rotor (1.2) ist auf der Abtriebsseite der hydrodynamischen Kupplung (2) vor dem Freilauf (2.3) an das Turbinerad (2.2) angeschlossen.

2. Kraftfahrzeug-Anfahrelement nach Anspruch 1, **dadurch gekennzeichnet, dass** die mechanische Überbrückungskupplung (6) eine Reibkupplung oder eine Klauenkupplung ist

3. Kraftfahrzeug-Anfahrelement nach einem der Ansprüche 1 oder 2 **dadurch gekennzeichnet, dass** die hydrodynamische Kupplung (2) eine Konsfantfüllungskupplung oder eine im Füllungsgrad des Arbeitsraumes regelbare Kupplung ist.

4. Kraftfahrzeug-Anfahrelement nach Anspruch 3, **dadurch gekennzeichnet, dass** das von dem Pumpenrad (2.1) auf das Turbinenrad (2.2) übertragbare Drehmoment über den Füllungsgrad und/oder mittels mechanischer Einbauten, die in die Kreislaufströmung drosselnd einbringbar sind, regelbar oder steuerbar ist.

5. Kraftfahrzeug-Anfahrejement nach einem der Ansprüche 1 bis 4, **dadurch gekennzeichnet, dass** der elektrischen Maschine (1) ein Energiespeicher, insbesondere in Form eines Akkumulators oder Kondensators zugeordnet ist, um von der elektrischen Maschine (1) erzeugte elektrische Energie zu speichern.

6. Kraftfahrzeugantriebsstrang, welcher ein Anfahrelement in Form einer Kupplung nach einem der Ansprüche 1 bis 5 aufweist, umfassend
6.1 eine Eingangswelle (3), insbesondere eine Kurbelwelle, zum Einleiten eines Antriebsmomentes und/oder einer Antriebsleistung von einer Antriebseinheit, insbesondere einem Verbrennungsmotor;
6.2 eine Ausgangswelle (4), insbesondere eine Gelenkwelle, zum Abgeben des Antriebsmomentes und/oder der Antriebsleistung auf Antriebsräder des Fahrzeugs;
6.3 ein Schaltgetriebe (5), umfassend eine Vielzahl von Gangstufen zur Einstellung verschiedener Übersetzungsverhältnisse, mit einer Getriebeeingangswelle (5-1) und einer Getriebeausgangswelle (5.2),wobei die Getriebeausgangswelle (5.2) in einer mechanischen Triebverbindung mit der Ausgangswelle (4) steht, in eine solche schaltbar ist oder die Ausgangswelle (4) bildet;
6.4 **dadurch gekennzeichnet, dass**
das Pumpenrad (2-1) in einer mechanischen Triebverbindung mit der Eingangswelle (3) steht oder in eine solche schaltbar ist, und das Turbinenrad (2.2)-in einer mechanischen Triebverbindung mit der Getriebeeingangswelle (5.1) steht oder in eine solche schaltbar ist.

7. Kraftfahrzeugantriebsstrang nach Anspruch 6, **dadurch gekennzeichnet, dass** das Turbinenrad (2.2) und der Rotor (1.2) der elektrischen Maschine (1) drehfest auf der Getriebeeingangswelle (5.1) angeordnet sind.

8. Kraftfahrzeugantriebsstrang nach einem der Ansprüche 6 oder 7, **dadurch gekennzeichnet, dass** das Schaltgetriebe (5) ein manuelles oder automatisiertes Schaltgetriebe oder ein Automatikgetriebe oder ein Teil eines solchen ist.

9. Kraftfahrzeugantriebsstrang nach einem der Ansprüche 6 bis 8, **dadurch gekennzeichnet, dass** das Turbinenrad (2.2) der hydrodynamischen Kupplung (2) oder des hydrodynamischen Wandlers und der Rotor (1.2) der elektrischen Maschine (1) in einer Triebverbindung mit der Getriebeeingangswelle (5.1) stehen oder in eine solche schaltbar sind, und die Getriebeeingangswelle (5.1) die einzige Eingangswelle und/oder der einzige mechanische Leistungseingang des Schaltgetriebes (5) ist

10. Kraftfahrzeugantriebsstrang nach einem der Ansprüche 6 bis 9, **dadurch gekennzeichnet, dass** die hydrodynamische Kupplung (2)
und die elektrische Maschine (1) in einem gemeinsamen Gehäuse (5.5), insbesondere zusammen mit dem Schaltgetriebe (5), angeordnet sind.

11. Verfahren zum Antreiben eines Kraftfahrzeugs mit einem Kraftfahrzeugantriebsstrang nach einem der Ansprüche 6 bis 10, **dadurch gekennzeichnet, dass** mittels der elektrischen Maschine (1) einer oder mehrere der folgenden Schritte ausgeführt werden:
- Anlassen der Antriebseinheit in Form eines Verbrennungsmotors durch Antreiben desselben mittels der elektrischen Maschine (1);
- elektrisches Anfahren und/oder Fahren des Kraftfahrzeugs mittels der elektrischen Maschine (1);
- gleichzeitiges Antreiben des Kraftfahrzeugs mittels der Antriebseinheit und der elektrischen Maschine (1);
- Betreiben der elektrischen Maschine (1) als Generator bei gleichzeitigem Antrieb des Kraftfahrzeugs mittels der Antriebseinheit wobei durch die elektrische Maschine (1) eine zusätzliche Last auf die Antriebseinheit, die als Verbrennungsmotor ausgeführt ist, aufgebracht wird;
- Synchronisieren des Schaltgetriebes (5) durch Abbremsen oder Beschleunigern der Getriebeeingangswelle (5.1) mittels der elektrischen Maschine (1);
- Sichern des Kraftfahrzeugs gegen Rollen, insbesondere gegen Rückrollen beim Anfahren an einer Steigung, durch Stationärhalten der Getriebeeingangswelle (5.1) mittels der elektrischen Maschine (1);
- Synchronisieren der beiden Hätften einer Überbrückungskupplung (6) zur mechanischen Verbindung der Primärseite und Sekundärseite des Anfahrelementes.

## Claims

1. A motor vehicle startup element in the form of a variable clutch having a rotationally drivable primary side and a secondary side, which is hydrodynamically or electrodynamically rotationally drivable by the primary side, comprising
1.1 a brake device for decelerating and/or keeping stationary the secondary side;
1.2 the brake device is an electrical machine (1), which has a stator (1.1) and a rotor (1.2), which are coupled to one another via an electromagnetic interaction;
1.3 the rotor (1.2) is connected or connectable in a rotationally fixed manner to the secondary side of the clutch in order to decelerate the secondary side;
1.4 the clutch is a hydrodynamic clutch (2) having a primary-side pump wheel (2.1) and a secondary-side turbine wheel (2.2), which jointly form a toroidal working space, which is filled or fillable with a working medium to form a torque-transmitting circuit flow, the pump wheel (2.1) and the turbine wheel (2.2) being mechanically connectable to one another via a mechanical lockup clutch (6) connected in parallel to the power transmission in the working space;
1.5 the hydrodynamic clutch (2) is provided on its output side with a freewheel (2.3) behind the turbine wheel (2.2) in the force flow direction; **characterized by** the following features:
1.6 the rotor (1.2) is attached to the turbine wheel (2.2) on the output side of the hydrodynamic clutch (2) before the freewheel (2.3).

2. The motor vehicle startup element according to Claim 1, **characterized in that** the mechanical lockup clutch (6) is a friction clutch or a claw clutch.

3. The motor vehicle startup element according to one of Claims 1 or 2, **characterized in that** the hydrodynamic clutch (2) is a constant filling clutch or a clutch which is variable in the degree of filling of the working space.

4. The motor vehicle startup element according to Claim 3, **characterized in that** the torque transmittable from the pump wheel (2.1) to the turbine wheel (2.2) can be regulated or controlled via the degree of filling and/or by means of mechanical fittings, which can be introduced in a throttling manner into the circuit flow.

5. The motor vehicle startup element according to one of Claims 1 to 4, **characterized in that** the electrical machine (1) is assigned an energy store, in particular in the form of a battery or capacitor, to store electrical power generated by the electrical machine (1).

6. A motor vehicle drivetrain, which has a startup element in the form of a clutch according to one of Claims 1 to 5, comprising
6.1 an input shaft (3), in particular a crankshaft, for introducing a drive torque and/or a drive power from a drive unit, in particular an internal combustion engine;
6.2 an output shaft (4), in particular a universal shaft, for delivering the drive torque and/or the drive power to drive wheels of the vehicle;
6.3 a shift transmission (5), comprising a plurality of gear steps for setting various transmission ratios, having a transmission input shaft (5.1) and a transmission output shaft (5.2), the transmission output shaft (5.2) being in a mechanical drive connection to the output shaft (4), being switchable into such a drive connection, or forming the output shaft (4);
**characterized in that**
6.4 the pump wheel (2.1) is in a mechanical drive connection to the input shaft (3) or can be switched into such a drive connection, and the turbine wheel (2.2) is in a mechanical drive connection with the transmission input shaft (5.1) or can be switched into such a drive connection.

7. The motor vehicle drivetrain according to Claim 6, **characterized in that** the turbine wheel (2.2) and the rotor (1.2) of the electrical machine (1) are arranged in a rotationally fixed manner on the transmission input shaft (5.1).

8. The motor vehicle drivetrain according to Claim 6 or 7, **characterized in that** the shift transmission (5) is a manual or automatic shift transmission or an automatic transmission or a part thereof.

9. The motor vehicle drivetrain according to one of Claims 6 to 8, **characterized in that** the turbine wheel (2.2) of the hydrodynamic clutch (2) or the hydrodynamic converter and the rotor (1.2) of the electrical machine (1) are in a drive connection with the transmission input shaft (5.1) or are switchable into such a drive connection, and the transmission input shaft (5.1) is the only input shaft and/or the only mechanical power input of the shift transmission (5).

10. The motor vehicle drivetrain according to one of Claims 6 to 9, **characterized in that** the hydrodynamic clutch (2) and the electrical machine (1) are arranged in a shared housing (5.5), in particular together with the shift transmission (5).

11. A method for driving a motor vehicle using a motor vehicle drivetrain according to one of Claims 6 to 10, **characterized in that** one or more of the following steps are executed by means of the electrical machine (1):
- starting the drive unit in the form of an internal combustion engine by driving it by means of the electrical machine (1);
- electrically starting up and/or driving the motor vehicle by means of the electrical machine (1);
- simultaneously driving the motor vehicle by means of the drive unit and the electrical machine (1);
- operating the electrical machine (1) as a generator while simultaneously driving the motor vehicle by means of the drive unit, an additional load being applied to the drive unit, which is implemented as an internal combustion engine, by the electrical machine (1);
- synchronizing the shift transmission (5) by decelerating or accelerating the transmission input shaft (5.1) by means of the electrical machine (1);
- securing the motor vehicle against rolling, in particular against rolling backward when starting up on a slope, by keeping the transmission input shaft (5.1) stationary by means of the electrical machine (1);
- synchronizing the two halves of a lockup clutch (6) to mechanically connect the primary side and secondary side of the startup element.

## Revendications

1. Élément de démarrage d'un véhicule à moteur prenant la forme d'un accouplement régulable avec un côté primaire pouvant être entraîné en rotation et un côté secondaire pouvant être entraîné en rotation de façon hydrodynamique ou électrodynamique par le côté primaire, comprenant
1.1 un dispositif de freinage pour ralentir le côté secondaire et/ou le maintenir stationnaire ;
1.2 le dispositif de freinage est une machine électrique (1) qui comporte un stator (1.1) et un rotor (1.2) couplés l'un à l'autre par une interaction électromagnétique ;
1.3 le rotor (1.2) est relié ou peut être relié de manière solidaire en rotation au côté secondaire de l'accouplement afin de ralentir le côté secondaire ;
1.4 l'accouplement est un accouplement hydrodynamique (2) avec une roue de pompe (2.1) du côté primaire et une roue de turbine (2.2) du côté-secondaire qui forment ensemble un espace de travail toroïdal rempli ou pouvant être rempli d'un fluide de travail pour former une circulation en circuit fermé transmettant un couple, la roue de pompe (2.1) et la roue de turbine (2.2) pouvant être reliées mécaniquement l'une à l'autre par un embrayage à prise directe mécanique (6) monté en parallèle dans l'espace de travail pour en vue de la transmission de puissance ;
1.5 l'accouplement hydrodynamique (2) est muni sur son côté de sortie, en aval de la roue de turbine (2.2) dans le sens de circulation de la force, d'une roue libre (2.3) ;
**caractérisé en ce que** -
1.6 le rotor (1.2) est raccordé à la roue de turbine (2.2) sur le côté de sortie de l'accouplement hydrodynamique (2) avant la roue libre (2.3).

2. Élément de démarrage d'un véhicule à moteur selon la revendication 1, **caractérisé en ce que** l'embrayage à prise directe mécanique (6) est un accouplement à friction ou un accouplement à griffes.

3. Élément de démarrage d'un véhicule à moteur selon l'une des revendications 1 ou 2, **caractérisé en ce que** l'accouplement hydrodynamique (2) est un accouplement à remplissage constant ou un accouplement à niveau de remplissage régulable dans l'espace de travail.

4. Élément de démarrage d'un véhicule à moteur selon la revendication 3, **caractérisé en ce que** le couple de rotation pouvant être transmis par la roue de pompe (2.1) à la roue de turbine (2.2) peut être régulé ou contrôlé à l'aide du niveau de remplissage et/ou au moyen de pièces internes mécaniques qui peuvent être introduites dans la circulation en circuit fermé pour réaliser un étrangement.

5. Élément de démarrage d'un véhicule à moteur selon l'une des revendications 1 à 4, **caractérisé en ce que** la machine électrique (1) est associée à un accumulateur d'énergie, en particulier sous la forme d'un accumulateur ou d'un condensateur, afin d'accumuler l'énergie électrique produite par la machine électrique (1).

6. Chaîne de transmission de véhicule à moteur comportant un élément de démarrage selon l'une des revendications 1 à 5, comprenant
6.1 un arbre d'entrée (3), en particulier un vilebrequin, pour transmettre un couple de propulsion et/ou une puissance de propulsion d'une unité de propulsion, en particulier d'un moteur à combustion interne ;
6.2 un arbre de sortie (4), en particulier un arbre à joint de cardan, pour délivrer le couple de propulsion et/ou la puissance de propulsion aux roues propulsant le véhicule ;
6.3 une boîte de vitesses (5) comprenant une pluralité de rapports pour régler différents rapports de multiplication, avec un arbre d'entrée de boîte de vitesses (5.1) et un arbre de sortie de boîte de vitesses (5.2), l'arbre de sortie de boîte de vitesses (5.2) étant en liaison motrice mécanique avec l'arbre de sortie (4), pouvant être amené dans une telle relation ou formant l'arbre de sortie (4) ;
**caractérisé en ce que**
6.4 la roue de pompe (2.1) est en liaison motrice mécanique avec l'arbre d'entrée (3) ou peut être amenée dans une telle relation et la roue de turbine (2.2) est en liaison motrice mécanique avec l'arbre d'entrée de boîte de vitesses (5.1) ou peut être amenée dans une telle relation.

7. Chaîne de transmission de véhicule à moteur selon la revendication 6, **caractérisée en ce que** la roue de turbine (2.2) et le rotor (1.2) de la machine électrique (1) sont disposés de façon solidaire en rotation sur l'arbre d'entrée de boîte de vitesses (5.1).

8. Chaîne de transmission de véhicule à moteur selon l'une des relations 6 ou 7, **caractérisée en ce que** la boîte de vitesses (5) est une boîte de vitesses manuelle ou automatisée ou une boîte automatique ou une partie de celle-ci.

9. Chaîne de transmission de véhicule à moteur selon l'une des relations 6 à 8, **caractérisée en ce que** la roue de turbine (2.2) de l'accouplement hydrodynamique (2) ou du convertisseur hydrodynamique et le rotor (1.2) de la machine électrique (1) sont en liaison motrice avec l'arbre d'entrée de boîte de vitesses (5.1) ou peuvent être amenés dans une telle relation, et l'arbre d'entrée de boîte de vitesses (5.1) est le seul arbre d'entrée et/ou la seule entrée mécanique de puissance de la boîte de vitesses (5).

10. Chaîne de transmission de véhicule à moteur selon l'une des revendications 6 à 9, **caractérisée en ce que** l'accouplement hydrodynamique (2) et la machine électrique (1) sont disposés dans un boîtier commun (5.5), en particulier avec la boîte de vitesses (5).

11. Procédé pour la propulsion d'un véhicule à moteur à moteur avec une chaîne de transmission de véhicule à moteur selon l'une des revendications 6 à 10, **caractérisé en ce qu'**une ou plusieurs des étapes suivantes sont exécutées au moyen de la machine électrique (1) :
- démarrage de l'unité de propulsion prenant la forme d'un moteur à combustion interne par l'entraînement de celui-ci au moyen de la machine électrique (1) ;
- démarrage électrique ou marche du véhicule à moteur au moyen de la machine électrique (1) ;
- propulsion simultanée du véhicule à moteur au moyen de l'unité de propulsion et de la machine électrique (1) ;
- pilotage de la machine électrique (1) comme générateur avec propulsion simultanée du véhicule à moteur au moyen de l'unité de propulsion, la machine électrique (1) appliquant une charge supplémentaire sur l'unité de propulsion qui est construite comme un moteur à combustion interne ;
- synchronisation de la boîte de vitesses (5) par freinage ou accélération de l'arbre d'entrée de boîte de vitesses (5.1) au moyen de la machine électrique (1) ;
- sécurisation du véhicule pour l'empêcher de dériver, en particulier de dériver en arrière lors du démarrage en cote, par le maintien stationnaire de l'arbre d'entrée de boîte de vitesses (5.1) au moyen de la machine électrique (1) ;
- synchronisation des deux moitiés de l'embrayage à prise directe (6) pour la liaison mécanique du côté primaire et du côté secondaire de l'élément de démarrage.
